# EUROPEAN PATENT SPECIFICATION

(11) **EP 2 908 936 B1**
(45) Date of publication and mention of the grant of the patent: **31.10.2018**
(21) Application number: 13847595.9
(22) Date of filing: 27.08.2013
(51) Int. Cl.: B01J 8/24, F23C 10/18

(54) **IN-BED SOLIDS CONTROL VALVE WITH IMPROVED RELIABILITY**
STEUERVENTIL FÜR BETTUNGSINTERNE FESTSTOFFE MIT VERBESSERTER ZUVERLÄSSIGKEIT
VANNE DE RÉGULATION DE SOLIDES INTÉGRÉE AU LIT PRÉSENTANT UNE FIABILITÉ AMÉLIORÉE

(30) Priority: 17.10.2012 US 201213653636
(43) Date of publication of application: 26.08.2015
(73) Proprietor: The Babcock & Wilcox Company, Barberton, OH 44203-0351 (US)
(72) Inventor: MARYAMCHIK, Mikhail, Fairlawn, OH 44333 (US); KRAFT, David, L, Massillon, OH 44646 (US); ALEXANDER, Kiplin, C, Wadsworth, OH 44281 (US); FLYNN, Thomas, J, North Canton, OH 44720 (US); HU, Shengteng, Copley, OH 44321 (US)
(74) Representative: D Young & Co LLP
(86) International application number: PCT/US2013/056724
(87) International publication number: WO 2014/062297

(56) References cited:
- US-A- 5 022 164
- US-A- 5 365 889
- US-A- 5 376 181
- US-A1- 2006 000 143
- US-A1- 2011 073 049
- US-A1- 2011 073 049
- US-B1- 6 699 444

## Description

### BACKGROUND

The present invention relates generally to the field of circulating fluidized bed (CFB) reactors and boilers such as those used in electric power generation facilities and industrial facilities. It particularly relates to CFB reactor arrangements containing both a CFB and one or more bubbling fluidized bed(s) (BFB's) feeding materials into a lower portion of the CFB reactor enclosure, and to non-mechanical valves for controlling solids flowing between slow bubbling bed region(s) and highly-fluidized CFB regions.

Reactors and boilers can use CFB's and BFB's together in various arrangements. For example, U.S. Patent 5,533,471 teaches placing the slow BFB below and to the side of the bottom of the faster moving CFB chamber. In U.S. Patent 5,526,775, the slow BFB is above and to the side of the fast CFB. U.S. Patent 5,190,451, to Goldbach, illustrates a CFB chamber having a heat exchanger immersed within a fluidized bed at the lower end of the chamber. U.S. Patent 5,184,671 to Alliston et al. teaches a heat exchanger having multiple fluidized bed regions. The present invention can be adapted for use with these or other arrangements.

The present invention also relates to valves for regulating the movement of solids, including solid fuel, between BFB's and CFB's. It relates, in particular, to non-mechanical valves to control the flow of granular solids between fluidized beds by regulating local fluidization at an opening in a wall between enclosures. As a general principal, such valves "open" by sufficiently aerating the area immediately around an opening between the enclosures so that the particles are "fluidized" and flow through the opening in a manner similar to a liquid. The valves "close" by stopping or slowing fluidization around the same openings so that the particles no longer behave and flow similarly to a liquid.
furnace and a separately-controllable BFB heat exchanger located inside of the CFB furnace. Heat transfer in the BFB's heat exchanger is controlled by controlling the rate of solids discharged from the lower part of the BFB into the larger CFB furnace. The discharge control may be accomplished using at least one non-mechanical valve between the CFB and the BFB. The non-mechanical valve may be operated by controlling flow rate of fluidizing gas in the vicinity of the valve. Reducing or completely shutting off fluidizing gas flow to the controlling fluidizing means (typically, bubble caps) hampers local fluidization and, as a result, slows or stops solids movement through the non-mechanical valve, thus allowing the control of the solids discharged from the BFB to the CFB (see, for example, Published Patent Application US 2011/0073049 A1). US 2011/0073049 A1 discloses a circulating fluidized bed boiler according to the preamble of claim 1. However, US 2011/0073049 A1 does not teach, at least, collectors linked to one or more independently controlled fluidizing means, the collectors being adapted for collecting solids in the event of backsifting of solids into the fluidizing means such that the collected solids do not obstruct a supply of fluidizing medium.

One problem with the prior art non-mechanical valve of Belin et al. is that solid bed material may fall into the fluidizing means (e.g., bubble caps), particularly when the fluidizing gas flow is shut off to limit the flow of solids through the valve. The problem can be particularly severe for idle fluidizing means that are adjacent to active fluidizing means. This can block the fluidizing gas flow once it is turned back on, and can hinder further use of the non-mechanical valve.

Another problem of reducing the flow rate of the fluidizing gas in the vicinity of the non-mechanical valve is bed material agglomeration. Turning off the fluidizing gas reduces local bed mixing. As bed solids combustion continues, there may be an increase in the local bed temperature that can lead to solid material agglomeration. Agglomeration may also happen elsewhere in the boiler, with the agglomerates eventually moving towards the non-mechanical valve along with the flow of other solids in the system. Such agglomerates, whether forming or accumulating in the vicinity of the valves, can eventually plug the valve and hinder its operation.

Yet another problem with operating a CFB boiler including a BFB is that the vigorous fluidization of the CFB furnace can interfere with local fluidization in the vicinity of the non-mechanical valve. This can interfere with control of solids flow from the BFB into the CFB through the valve which relies, at least in part, on controlling fluidization.

US 5 376 181 A discloses a nozzle assembly which comprises a nozzle duct having inlet and discharge ends provided with a tubular support.

### BRIEF DESCRIPTION

The present invention provides an improved non-mechanical valve assembly which can be used with prior art fluidized bed boilers including, but not limited to, the CFB boiler taught by U.S. Patent 6,532,905 to Belin et al. comprising a BFB linked to a CFB. As mentioned, non-mechanical valves can be used to control the flow of granular solids between enclosures by regulating local fluidization at an opening in a wall between the enclosures. Typically, such valves "open" by injecting fluidizing gas into the area immediately around an opening between the two enclosures so that the solid particles there are "fluidized", i.e., behaving in a manner similar to a liquid. The solid particles flow through the opening in the wall when they are fluidized. The valves "close" by stopping or slowing gas injection, thereby ending fluidization around the openings. Absent fluidization, the solid particles no longer behave or flow like a liquid, and thus no longer flow through the opening in the wall, or else move through at a much lower rate.

The present invention eliminates problems associated with temporarily closing non-mechanical valves by reducing or stopping the flow of fluidizing medium. The problem of solid material backsifting into the fluidization means when fluidizing gas flow is turned off, and thereby causing their blockage, is solved by providing collectors. These collectors are typically placed below the fluidization means, so that solids backsifting into the fluidization means will fall into the collectors and be stored below a level where they can impede the flow of the fluidizing gas. The solids are periodically or continuously removed from the collectors to keep their level sufficiently low. In a preferred embodiment, the collectors can be emptied during boiler operation without interrupting the flow of fluidizing medium, ideally without breaking any seal that would allow escape of fluidizing medium.

Removal means are also provided in the valve arrangement for removing agglomerates from the solids flow based, for example, on their larger size and greater weight. As a result, the probability of large agglomerates sticking in and blocking valves is reduced. In a preferred embodiment, the removal means are sealed against furnace pressure, the rate of solids removal out of the system is controlled, and the removed material is cooled.

The present invention also alleviates interference between the intense fluidization of the CFB furnace and the fluidization-controlled non-mechanical valve between the CFB and the BFB. Walls projecting into the BFB and/or CFB from the BFB enclosure wall form channels or tunnels, which block lateral solids movement near the valve openings. These walls shield the opening between the CFB and the BFB from the most extreme effects of the CFB solids churning, and thus improve control over local fluidization and the function of the non-mechanical valves.

In a preferred embodiment, there is little or no solids flow through the non-mechanical valve, i.e. the valve is "closed," when local fluidization by independently controlled fluidizing means is turned off. The invention teaches how to design passages between BFB's and CFB's that substantially block particle flow in the manner of an L-valve. All of the improvements of the invention can be applied to a range of non-mechanical valves regulating granular material flow between different compartments using local fluidization, particularly where at least one of the compartments contains a fluidized bed.

Accordingly, one aspect of the present invention is drawn to a circulating fluidized bed boiler comprising: a circulating fluidized bed boiler reaction chamber comprising side walls and a distribution grid defining a floor at a lower end of the circulating fluidized bed boiler reaction chamber, the distribution grid being adapted for providing fluidizing gas into the circulating fluidized bed boiler reaction chamber; a bubbling fluidized bed located within a lower portion of the circulating fluidized bed boiler reaction chamber and being bound by enclosure walls and by the floor of the circulating fluidized bed boiler reaction chamber; at least one controllable in-bed heat exchanger, the in-bed heat exchanger occupying part of the circulating fluidized bed boiler reaction chamber floor and being within the enclosure walls of the bubbling fluidized bed; at least one non-mechanical valve designed to permit the control of solids discharge from the bubbling fluidized bed into the circulating fluidized bed boiler reaction chamber, the valve comprising at least one opening in the enclosure wall of the bubbling fluidized bed, and including at least one independently controlled fluidizing means located at least at one of upstream and downstream of the opening; the at least one independently controlled fluidizing means each being connected to corresponding fluidizing medium supply means, the independently controlled fluidizing means being adapted for controlling a flow rate of solids from the bubbling fluidized bed to the circulating fluidized bed boiler reaction chamber, the independently controlled fluidizing means being controlled separately from the distribution grid; the independently controlled fluidizing means and the fluidizing medium supply means being at least one of connected to and comprising collectors, the collectors being adapted for collecting solids in the event of backsifting of solids into the fluidizing means such that the collected solids do not obstruct the supply of fluidizing medium; valves for sealing at least one of the collectors, the fluidizing means, and the fluidizing medium supply means, to allow removal of backsifted solids from the collectors during operation of the circulating fluidized bed furnace; the non-mechanical valve further comprising at least one solids removal means, being adapted for removal of agglomerates, located at least one of upstream and downstream of said at least one opening in the bubbling fluidized bed enclosure wall; the removal means each being connected to at least one screw cooler adapted for sealing against furnace pressure, for controlling solids discharge rate through the removal means, and for cooling discharged solids and agglomerates; the bubbling fluidized bed enclosure wall comprising a plurality of channel walls adjacent to one or more openings in the bubbling fluidized bed enclosure wall, the walls projecting generally away from the enclosure wall into at least one of the circulating fluidized bed and the bubbling fluidized bed, the channel walls being adapted to reduce lateral movement of solids in one or more directions perpendicular to the direction of solids discharge from the bubbling fluidized bed to the circulating fluidized bed.

Yet another aspect of the present invention is drawn to a circulating fluidized bed boiler comprising: a circulating fluidized bed boiler reaction chamber comprising side walls and a distribution grid for providing fluidizing gas into the circulating fluidized bed boiler reaction chamber; a bubbling fluidized bed in a compartment including at least one enclosure wall; at least one controllable in-bed heat exchanger, the in-bed heat exchanger being located within the compartment comprising the bubbling fluidized bed; at least one non-mechanical valve adapted to control solids discharge from the bubbling fluidized bed into the circulating fluidized bed boiler reaction chamber, the valve comprising at least one opening in the enclosure wall, and including at least one independently controlled fluidizing means located at least at one of upstream and downstream of the opening; the independently controlled fluidizing means each being connected to fluidizing medium supply means, the independently controlled fluidizing means being adapted for controlling a flow rate of solids from the bubbling fluidized bed to the circulating fluidized bed boiler reaction chamber, the independently controlled fluidizing means being controlled separately from the distribution grid; and collectors linked to the one or more independently controlled fluidizing means, the collectors being adapted for collecting solids in the event of backsifting of solids into the fluidizing means such that the collected solids do not obstruct a supply of fluidizing medium.

Yet another aspect of the present invention drawn to a non-mechanical valve arrangement for selectively controlling a flow of particulate solids between two compartments wherein at least one of said compartments comprises a fluidized bed, the non-mechanical valve arrangement comprising: an enclosure wall separating the two compartments; an opening in the enclosure wall linking the two compartments; independently controlled fluidizing means located at least one of upstream and downstream of the opening, the independently controlled fluidizing means being connected to fluidizing medium supply means and being adapted for selectively controlling the flow of particulate solids through the opening; one or more collectors connected to the independently controlled fluidizing means, the collectors being adapted for collecting any solids entering the fluidizing means such that the collected solids do not obstruct the supply of fluidizing medium to the fluidizing means; and one or more independently controlled solids removal means located at least one of upstream and downstream of the opening, the removal means being adapted for removal of solids and agglomerates.

These and other non-limiting aspects and/or objects of the disclosure are more particularly described below.

The various features of novelty which characterize the invention are pointed out with particularity in the claims annexed to and forming a part of this disclosure. For a better understanding of the invention, its operating advantages, and specific objects attained by its uses, reference is made to the accompanying drawings and descriptive matter in which a preferred embodiment of the invention is illustrated.

### BRIEF DESCRIPTION OF THE DRAWINGS

In the drawings:
Fig. 1 is a schematic partial side elevational view of a CFB boiler which comprises a CFB furnace or reaction chamber, a particle separator, a BFB containing an IBHX, and a non-mechanical valve separating the CFB furnace from the BFB;
Fig. 2, taken along sectional view 2 - 2 of FIG. 1, is a sectional plan view of the CFB boiler, CFB furnace, BFB, and IBHX;
Fig. 3 is an enlarged partial side sectional view of a non-mechanical valve of the invention separating the BFB and the CFB furnace;
Fig. 4 is an enlarged partial side sectional view of an alternative embodiment of the non-mechanical valve of the invention separating the BFB and the CFB furnace;
Fig. 5A is a partial top perspective view of an enclosure wall between the BFB and the CFB, the wall including non-mechanical valves and channel walls protruding away from the enclosure wall, part of the enclosure wall being removed for improved visibility;
Fig. 5B is an enlarged view of a portion of the enclosure wall of Fig. 5A where part of the wall covering is removed to show pipes inside the wall;
Fig. 6 is a partial top perspective view of an alternative arrangement of openings in the enclosure wall between the BFB and the CFB, and of channel walls protruding away from the enclosure wall, part of the wall being removed for improved visibility;
Fig. 7 is a partial top perspective view of openings in another enclosure wall between the BFB and the CFB, and of channel walls connected by a top bridging surface protruding away from the enclosure wall, part of the wall being removed for improved visibility; and
Figs. 8A and 8B are sectional side elevational views of two embodiments of non-mechanical valve arrangements comprising channels, the channels having dimensions adapted to shut down solids flow through them in the absence of fluidization.

### DETAILED DESCRIPTION

A more complete understanding of the processes and apparatuses disclosed herein can be obtained by reference to the accompanying drawings. These figures are merely schematic representations based on convenience and the ease of demonstrating the existing art and/or the present development, and are, therefore, not intended to indicate relative size and dimensions of the assemblies or components thereof.

Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

The modifier "about" used in connection with a quantity is inclusive of the stated value and has the meaning dictated by the context (for example, it includes at least the degree of error associated with the measurement of the particular quantity). When used with a specific value, it should also be considered as disclosing that value. For example, the term "about 2" also discloses the value "2" and the range "from about 2 to about 4" also discloses the range "from 2 to 4."

As is known to those skilled in the art, heat transfer surfaces which convey steam-water mixtures are commonly referred to as evaporative boiler surfaces; heat transfer surfaces which convey steam therethrough are commonly referred to as superheating (or reheating, depending upon the associated steam turbine configuration) surfaces. Regardless of the type of heating surface, the sizes of the tubes, their material, diameter, wall thickness, number, and arrangement are based upon temperature and pressure for service, according to applicable boiler design codes, such as the American Society of Mechanical Engineers (ASME) Boiler and Pressure Vessel Code, Section I, or equivalent other codes as required by law.

To the extent that explanations of certain terminology or principles of the heat exchanger, boiler, and/or steam generator arts may be necessary to understand the present disclosure, and for a more complete discussion of CFB boilers, or of the design of modern utility and industrial boilers, the reader is referred to the reader is referred to Steam/its generation and use, 41st Edition, Kitto and Stultz, Eds., Copyright © 2005, The Babcock & Wilcox Company, Barberton, Ohio, U.S.A., Lib. of Congress No. 92-74123, the text of which is hereby incorporated by reference as though fully set forth herein.

The present invention solves several problems encountered with non-mechanical, fluidizing-medium controlled valves of the prior art. In a particularly preferred embodiment described herein to demonstrate the invention, an improved non-mechanical valve is used with a CFB boiler comprising both a CFB reaction chamber and a BFB with IBHX located within the reaction chamber.

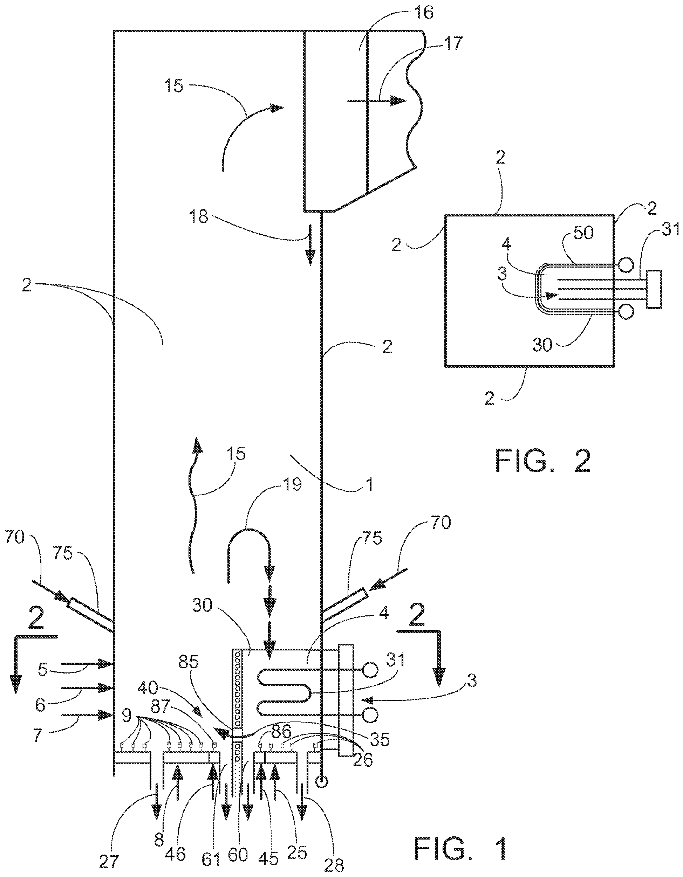

Referring now to the drawings, where like reference numerals designate the same or similar elements throughout the drawings, Figs. 1 and 2 show a preferred CFB boiler system comprising a CFB reaction chamber or furnace 1 and implementing the present invention. The furnace includes walls 2, and an in-bed heat exchanger (IBHX) 3 immersed in a BFB 4 located within the reaction chamber 1. The heating surface of the IBHX 3, which absorbs heat from the BFB 4, may be a superheater, a reheater, an economizer, or combinations of similar heating surfaces which are known to those skilled in the art. The IBHX heating surface is typically comprised of tubes or pipes 31 which convey a heat transfer medium therethrough, such as water, a two-phase mix of water and steam, or steam.

The CFB may be comprised of solids made up of fuel 5, the ash of the fuel 5, sorbent 6 and, in some cases, external inert material 7 fed through at least one of the walls 2 of the furnace. Many other possible solid components are known to those of skill in the art. The CFB is fluidized by injection of the primary air 8 and/or by other gases. The fluidizing air is preferably supplied through a distribution grid 9 which may comprise a part of the furnace floor, and which typically comprises bubble caps.

Some solids 15 are entrained upward by gases resulting from the fuel combustion and eventually reach a particle separator 16 near the furnace exit. While some of the solids 17 pass the separator, the bulk of the solids 18 are captured and recycled back to the furnace. Part of the captured solids 18, along with other solids 19 falling out of the upflow solids stream 15 driven by gravity will enter the BFB 4.

The BFB 4 is fluidized by fluidizing medium 25 fed through a distribution grid 26, which may comprise part of the furnace floor. This will generally be a separate grid from the distribution grid 9, which fluidizes the CFB. As is well known to those skilled in the art, the most common design of a distribution grid would be an array of bubble caps fed from a corresponding source of fluidizing medium. A bubble cap is comprised of a bubble cap proper and a supply pipe, typically referred to as the stem, which interconnects the fluidizing medium with the fluidized bed. Fluidizing gas is conveyed upwardly along the stem into the bubble cap, from which it is distributed to the fluidized bed via a plurality of outlet holes. Jets of fluidizing gas exiting from the outlet holes penetrate into the CFB or BFB fluidizing particulate solids in the area around each bubble cap.

Means for removing solids from the CFB and BFB (27 and 28, correspondingly) are preferably provided in the pertinent areas of the floor.

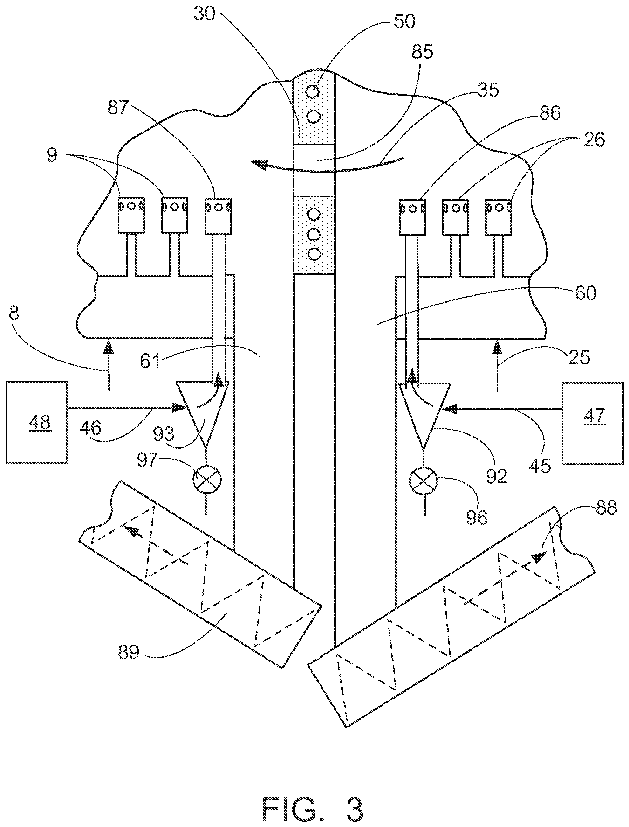

The BFB 4 is separated from the CFB by an enclosure wall 30 comprising one or more non-mechanical valves 40. The rate of solid recycle 35 back to the CFB through one or more non-mechanical valves 40 is controlled by controlling one or more streams of the fluidizing medium 45 and 46. The streams of fluidizing medium are preferably provided through one or more independently controlled fluidizing means 86, 87, 94, 95, which are located upstream (towards the BFB) and/or downstream (towards the CFB) of the opening(s) 85 in the enclosure wall 30 (Figs. 3-4).

Gas flow to the vicinity of the non-mechanical valve promotes solids discharge from the lower part of the BFB 4 into the CFB 1. Independent control of these flow rates, e.g., turning them on and off in alternate cycles, allows for smoothing the solids discharge rate. Particular fluidizing medium control patterns (frequency of cycling, length of a cycle, etc.) depend on properties of the bed material and boiler operation requirements and should be established during boiler commissioning.

The fluidizing gas streams 45, 46 are preferably controlled independently of the CFB distribution grid 9 and the BFB distribution grid 26, and may be controllable independently of each other, but are most preferably regulated in accordance with each other in operation. As used in the claims, the term "independently controlled fluidizing means" always refers to fluidizing means which are capable of being controlled independently of the distribution grids 9, 26, and preferably, but not necessarily, independent of other independently controlled fluidizing means in the same row or in different rows. In one preferred embodiment, independently controlled fluidizing means are provided in from one to six rows on each of one or both sides of a enclosure wall 30, each row comprising a plurality of bubble caps. In a most preferred embodiment the fluidizing means in each row are controlled together as a row, but each row can be controlled separately from any other rows and separately from the distribution grids 9, 26. Typically, each row will be parallel to a enclosure wall 30, the wall having one or several openings 85. Thus, controlling the fluidization of each row may affect more than one valve 40 if the row is near more than one opening 85. Embodiments where each valve is controlled separately, and where fluidizing means are not controlled as a row, are also possible, however.

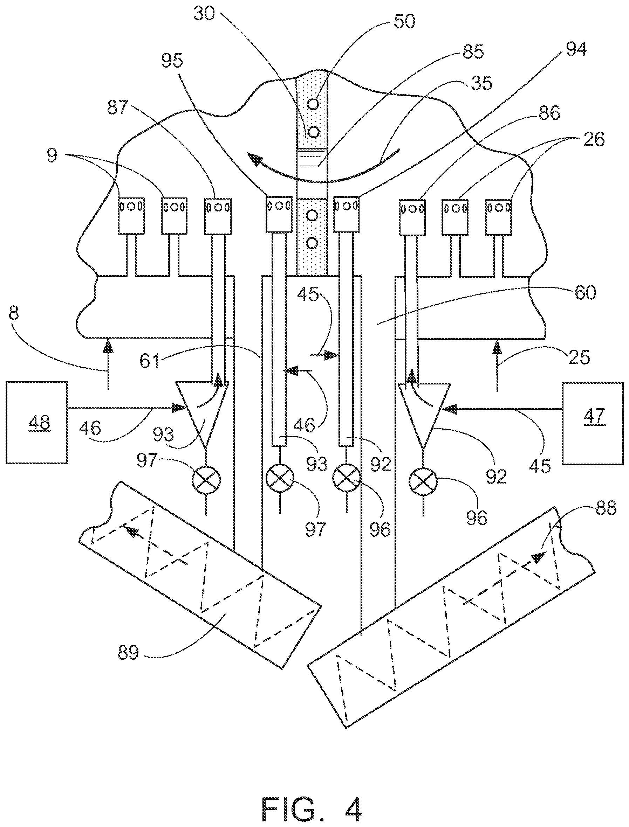

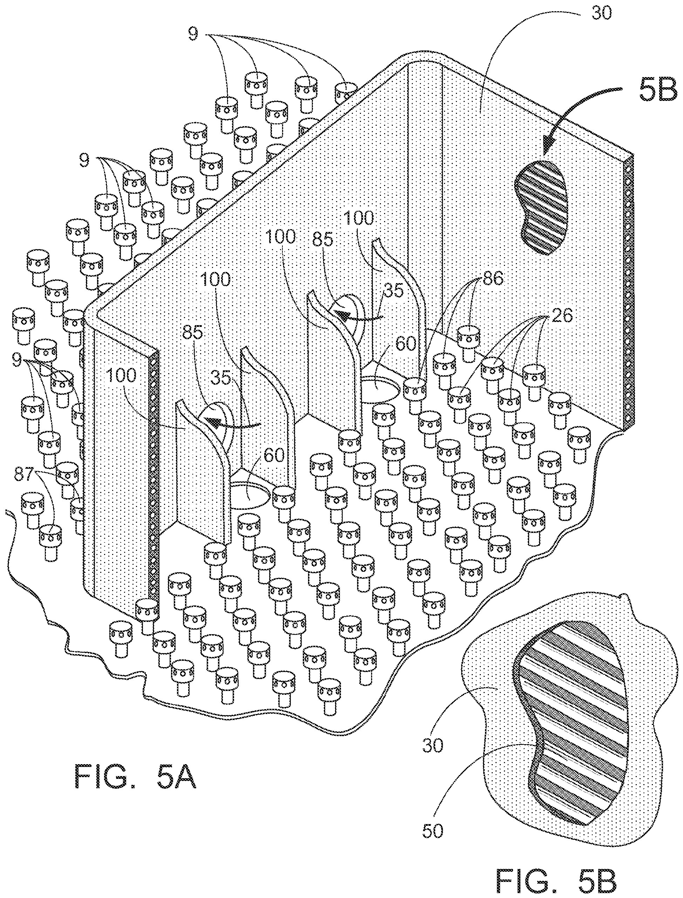

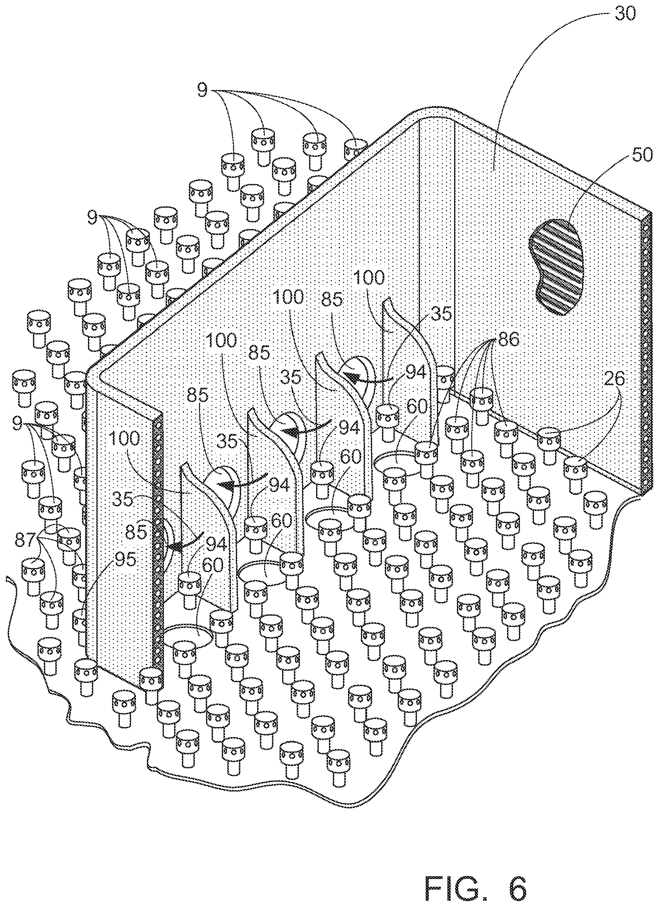

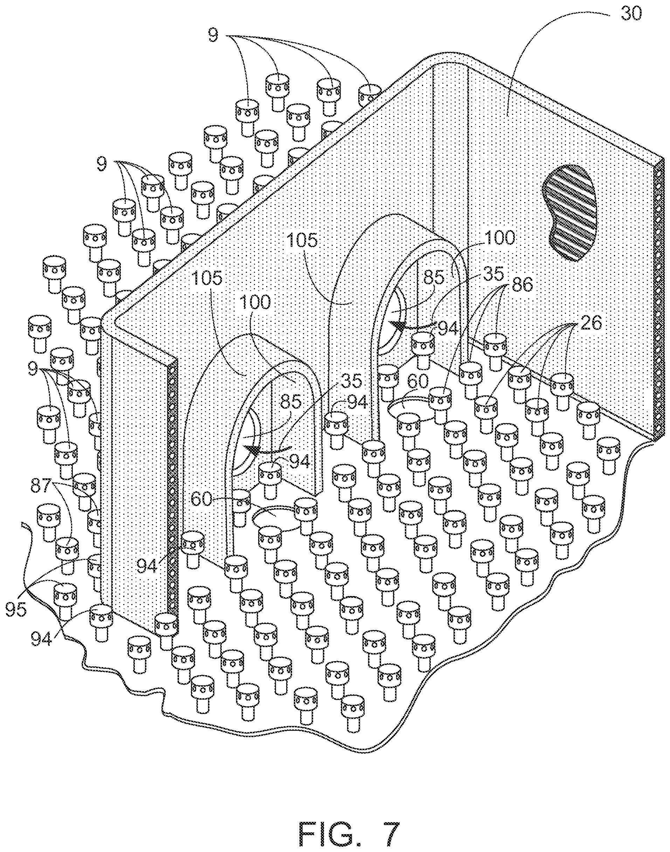

Persons of skill in the art will appreciate that the non-mechanical valves 40 can include wall openings 85, independently controlled fluidizing means 86, 87, 94, 95, solids removal means 60, and other components in a wide variety of configurations. Fig. 5A shows an embodiment similar to the example of Fig. 3. In Figs. 3 and 5A there are solids removal means 60, 61 immediately on both sides of each opening 85. Outside of each solids removal means 60, 61 is a single row of independently controlled fluidizing means 86, 87. The bubble caps beyond the single row of independently controlled fluidizing means make up the BFB and CFB distribution grids 26 and 9, correspondingly. Fig. 6 shows an embodiment similar to the example of Fig. 4. Each side of the enclosure wall 30 has a single row of independently controlled fluidizing means 94, 95, followed by a solids removal means 60, 61, followed by one more row of independently controlled fluidizing means 86, 87 in the example of Fig. 4, and two more rows in the example of Fig. 6. Fig. 7 shows another alternative where not all of the independently controlled fluidizing means are provided in complete rows. Two independently controlled fluidizing means bubble caps are provided immediately on each side of each opening 85, although the rows nearest the openings are not continuous between the openings 85 of the valves 40.

The independently controlled fluidizing means 86, 87, 94, 95 are typically bubble caps, but other embodiments are possible. The independently controlled fluidizing means may comprise the same type of bubble caps as found in the distribution grids 9, 26, or they may take different forms.

The enclosure wall 30 is preferably made of tubes or pipes 50 that are cooled by water or steam. The tubes are usually protected from erosion and corrosion by a protective layer, commonly formed by a refractory held by studs welded to the tubes. The tubes may be horizontal as shown in Fig. 5B, vertical, or in other arrangements. Figs. 3 and 4 show sectional views of pipes 50 within an enclosure wall 30. Fig. 2 shows an example tube 50 within a enclosure wall 30 from above. The tubes may optionally extend into channel walls 100 and bridge surfaces 105 when present.

In a preferred embodiment, secondary air 70 or another gas is supplied through nozzles 75. The nozzles 75 are typically located on the opposite walls 2 of the CFB furnace somewhat above the floor of the furnace.

Fig. 3 shows a blowup of the area around and including a preferred embodiment of a non-mechanical valve 40. The valve comprises an opening 85 in the enclosure wall 30, and independently controlled fluidizing means 86 and 87, located upstream and downstream of the opening 85 respectively. These fluidizing means can be implemented as a number of bubble caps connected to corresponding sources 47 and 48 of fluidizing medium, 45 and 46, respectively. Each fluidizing means, i.e. 86 or 87, can be comprised of several groups of bubble caps, each group being supplied with fluidizing medium from its own corresponding source 47 or 48 with the flow rate being controlled for each group independently. Such a group can be arranged as a row of bubble caps parallel to the enclosure wall 30 containing the opening 85. It is possible that only one means (either upstream or downstream of the opening 85) is employed, and the other one is not present in some designs. It is possible to have multiple openings 85 having either separate or shared fluidizing means 86, 87 so that all of the openings 85 might be controllable only as a group, or each opening 85 may be separately controllable.

As is well known to those skilled in the art, the most common embodiment of a distribution grid, such as 9 for CFB or 26 for BFB, would be an array of bubble caps fed from a corresponding source of the fluidizing medium, i.e. 8 for CFB and 25 for BFB. To prevent erosion of the bubble caps (or other fluidizing means) in the vicinity of the opening 85 by the solids flow through the opening, the tops of the bubble caps should not be higher than the bottom of the opening.

The non-mechanical valve 40 is preferably equipped with solids removal means 60 and 61. The removal means 60 and 61 are adapted to allow passage for removal of agglomerates that can be formed at, or transported to, the vicinity of the opening, and selectively remove agglomerates from the other solids based, for example, on their greater size and weight. Solids removal means 60 and 61 are preferably located both upstream and downstream of the opening 85, but their positions and quantity can vary. For example, solids removal means might only be provided on one side of each wall opening, and there may or may not be fluidizing means between the removal means and the nearest wall opening. Preferably, the solids removal means 60 and 61 are separately controlled. Preferably, the removal means 60 and 61 are sealed against furnace pressure, and to control solids discharge. This can be accomplished using screw coolers 88 and 89 that are also adapted to cool discharged solids, or by other means known to those skilled in the art.

Independently controlled fluidizing means 86, 87,94, 95 are preferably connected to corresponding collectors 92 and 93. Fluidizing medium 45 and 46 is preferably supplied to the upper parts of the collectors 92 and 93, respectively, from where it is distributed to corresponding fluidizing means. If backsifting takes place, such as when the fluidizing medium is turned off, any solids falling into the fluidizing means 86 and 87 should end up in the collectors 92 and 93. The level of accumulated solids in the collectors 92 and 93 should be maintained below the elevation of the supply of the fluidizing medium 45 and 46 so that backsifted solids do not affect operation of the fluidizing means 86 and 87.

Alternatively, the means 92 and 93 for collecting backsifted solids may be further separated from the path of the fluidizing medium 45, 46 to the corresponding fluidizing means. For example, the Fig. 4 shows an embodiment where fluidizing medium 45 and 46 is provided to the midpoint of tubes that lead upward to fluidizing means 94 and 95 respectively and downward to areas where solids can collect well away from the path of the fluidizing medium. Persons of skill in the art will be capable of devising various means for collecting or trapping backsifted solids without blocking fluidizing medium using this concept. Embodiments where fluidizing medium does not pass through the collectors 92 and 93 may be desirable in some applications.

In preferred embodiments the collectors 92, 93 can be emptied while the furnace is operating, and without turning off the fluidizing medium 45, 46 pressure to any fluidizing means. Sealing off the collectors 92 and 93 while removing the backsifted solids can be accomplished by rotary valves 96 and 97 or by other means known to those skilled in the art. For example, a rotary valve could be used to remove backsifted solids from the bottom of a collector, while the collector remains pressurized, without opening a direct path for the escape of fluidizing medium. Alternatively, the collectors themselves could be temporarily sealed off from the fluidizing medium pressure during emptying. It is preferable if the fluidizing medium streams 45 and 46 can be maintained while the collectors 92 and 93 are emptied to prevent backsifting of additional solids during emptying, and to allow uninterrupted operation of the boiler system.

The independently controlled fluidizing means 86, 87, 94, 95 can be located on either one or both sides of the solids removal means 60 and 61. The latter arrangement is exemplified in Fig. 4. There may be more than one fluidizing means or multiple rows of fluidizing means on each side of each opening 85. For example, Fig. 6 shows an embodiment having three rows of independently controlled fluidizing means 86, 87, 94, 95 on each side of each opening 85. Fluidizing means and removal means may be effectively used in a variety of arrangements, and the invention is not limited to the illustrative embodiments shown in Figs. 3-7.

Each fluidizing means 86 and 87, or each part of each fluidizing means (such as when a fluidizing means comprises multiple bubble caps), may be supplied with fluidizing medium 45 and 46 either individually or via shared sources of fluidizing medium 47 and 48 shared with other units. Similarly, solids collection means 92 and 93 may or may not be shared.

Arrangements where different fluidizing media may be selectively supplied to each fluidizing means - such as regular air or reduced oxygen air - may be used.

The applicants have found that the considerable turbulence of CFB's can interfere with fluidization in the vicinity of adjacent non-mechanical valves. This can affect the ability of such non-mechanical valves to regulate solids discharge rate, for example, from a BFB into a CFB furnace.

The applicants have discovered that controllability of solids discharge rate can be improved by creating channels parallel to the direction of the solids discharge. Such channels allow unobstructed solids movement through the opening, but suppress bed movement in other directions. These channels can be formed, for example, by walls 100 on the sides of opening 85. Each wall protrudes away from the enclosure wall 30 into at least one of the CFB and/or the BFB, preferably by a distance of at least one half of the width of the opening. The channel walls suppress lateral bed material movement in directions perpendicular to that of the solids discharge from the BFB to the CFB. See Figs. 5A, 6 and 7 for non-limiting examples of wall 100 arrangements and placements relative to the openings 85. The tops of the walls 100 above the opening(s) can also be bridged by a surface 105 for restricting the vertical movement of the bed material near the opening 85. A bridge surface 105 can reduce vertical bed material movement which is also perpendicular to the direction of the solids discharge from the BFB into the CFB furnace. The bridge surfaces 105 protrude into at least one of the CFB and the BFB, preferably protruding at least as far as the walls 100 protrude (Fig. 7). This aspect of the invention - using walls 100 parallel to the solids flow direction to limit perpendicular motion - can be applied to a variety of interfaces which comprise fluidized solids on one or both sides.

Similar to other parts of the enclosure wall 30, the walls 100 and bridge surfaces 105 may comprise tubes 50 cooled by water or steam, and are preferably covered with refractory, firebrick or a similar substance.

The size, shape and length of the opening 85 can play a role in controlling the flow of granular solids from the BFB side of the enclosure wall 30 to the CFB furnace 1 side. In a preferred embodiment, solids will not flow substantially from the BFB side though the opening 85 to the CFB side of the enclosure wall 30 unless the solids are at least somewhat fluidized. Preferably, steady flow through the opening 85 can be restored using fluidization means 86, 87, 94, 95.

The area inside the enclosure wall 30 which may be a BFB under fluidization conditions, in combination with a properly dimensioned opening 85, can together function as an L-valve for regulating the flow of granular solids through the opening. As is known to those skilled in the art, L-valves allow reliable control of the rate of solids flow, including complete flow shutdown.

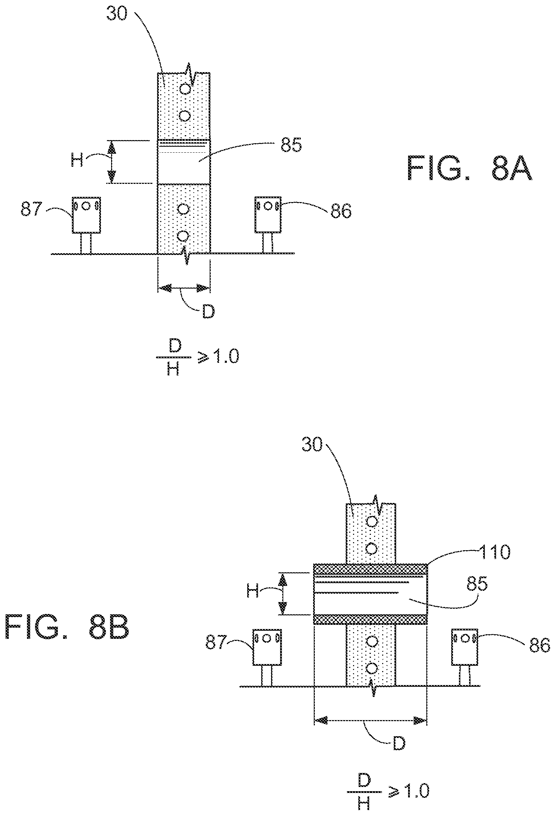

The L-valve geometry required for flow rate control depends on the properties of the solids, in particular, the solids' angle of repose. While most common bed material produced in CFB combustion has an angle of repose in the 35-40° range, in atypical cases the angle of repose may fall in the range of 30-45°. Given an angle of repose in the 35-40° range, the minimal depth-to-height ratio (horizontal:vertical ratio) of the channel 85 required for solids flow shutdown is about 1.4-1.2 for most common cases. The ratio may be as high as 1.7 or as low as 1.0 in unusual cases. See Figs. 8A and 8B. The angle of repose of the solids, such as fuel ash, that a given CFB boiler is designed to accommodate can be used to calculate desirable channel 85 dimensions depending on, for example, whether or not it is desirable for solids to flow through the opening 85 in the absence of fluidization.

The walls 100 and bridging surfaces 105 discussed above may, optionally, be designed to function as part of an L-valve in addition to regulating lateral fluidization movement.

In addition to the embodiments using walls 100, 105 described above, channels can be formed in other ways, e.g., by using the thickness of the enclosure wall 30, by forming opening 85 with pipe 110, and other means which will be apparent to one of skill in the art. Two examples are illustrated in Fig. 8. The components of the channels, such as walls 100, bridging surfaces 105, or pipes 110, can be made of various materials able to withstand conditions of a CFB furnace: ceramic, firebrick, refractory covered tubes, etc. and a combination of thereof, e.g. refractory covered tubes and ceramic parts.

Solids discharge through one or more non-mechanical valves 40 can be stopped by stopping fluidization by the pertinent independently controlled fluidizing means 86, 87, 94, 95. This, however, may cause agglomeration of solids in the temporarily-stagnated bed in the vicinity of the shut down valve. This is particularly true when continued combustion causes localized temperature increase. Since formation of agglomerates is usually a slow process, it can be prevented by periodic fluidization of the stagnated bed. Such a fluidization can be brief relative to the duration of the idle period to minimize its effect on overall discharge rate, but of sufficient duration to break-up and prevent incipient agglomerates. For example, the areas adjacent to the wall openings or other regions might be fluidized for short periods spaced by longer periods of non-fluidization.

As discussed, local reductions in fluidization can result in local heat buildup due to continued combustion, leading to the formation of agglomerates. Thus, it is sometimes desirable to reduce the local heat release rate in areas of the bed where mixing may (at least temporarily) be reduced, such as the vicinity of the opening 85, to decrease the chances of forming agglomerates there. A reduction of the heat release rate around an opening 85 may be accomplished by using a fluidizing medium 45 and 46 with reduced content of oxygen, e.g. flue gas. Depending on the makeup of the fuel, the ash, and other solids, reducing oxygen content in the fluidizing medium down to 15% may be sufficient for preventing agglomeration. In other cases, its oxygen content should be reduced to 12%, or even as low as 9% or 6% to achieve adequate cooling. Low oxygen medium may be used in combination with the intermittent fluidization technique to prevent agglomerates.

It will be understood by persons of skill in the art that the improved non-mechanical valves of the present invention - comprising agglomerate removal means 60 and 61, backsifted solids collection means 92 and 93 connected to the fluidizing means 86, 87, 94, 95, perpendicular channel walls 100 and 105, valve openings having specific depth to height ratios, and/or other disclosed improvements - can be used in a variety of boilers and other devices comprising fluidized beds known in the art. Non-limiting examples are described in the patents identified in the Background section above, as well as in texts such as Steam/its generation and use, 41st Edition, Kitto and Stultz, Eds., Copyright © 2005, The Babcock & Wilcox Company, Barberton, Ohio, U.S.A., pp. 17-1 - 17-15. Lib. of Congress No. 92-74123.

The present disclosure has been described with reference to exemplary embodiments. Obviously, modifications and alterations will occur to others upon reading and understanding the preceding detailed description. It is intended that the present disclosure be construed as including all such modifications and alterations insofar as they come within the scope of the appended claims.

While specific embodiments of the present invention have been shown and described in detail to illustrate the application and principles of the invention, it will be understood that it is not intended that the present invention be limited thereto and that the invention may be embodied otherwise without departing from the invention as defined by the following claims.

## Claims

1. A circulating fluidized bed boiler comprising:
a circulating fluidized bed boiler reaction chamber (1) comprising side walls and a distribution grid (9) for providing fluidizing gas into the circulating fluidized bed boiler reaction chamber;
a bubbling fluidized bed in a compartment including at least one enclosure wall (30);
at least one controllable in-bed heat exchanger (3), the in-bed heat exchanger being located within the compartment comprising the bubbling fluidized bed;
at least one non-mechanical valve (40) adapted to control solids discharge from the bubbling fluidized bed into the circulating fluidized bed boiler reaction chamber, the valve comprising at least one opening in the enclosure wall, and including at least one independently controlled fluidizing means located at least at one of upstream and downstream of the opening; and
the at least one independently controlled fluidizing means (86, 87, 94, 95) each being connected to fluidizing medium supply means, the independently controlled fluidizing means being adapted for controlling a flow rate of solids from the bubbling fluidized bed to the circulating fluidized bed boiler reaction chamber, the independently controlled fluidizing means being controlled separately from the distribution grid; **characterised by**
collectors (92, 93) linked to the one or more independently controlled fluidizing means, the collectors being adapted for collecting solids in the event of backsifting of solids into the fluidizing means such that the collected solids do not obstruct a supply of fluidizing medium.

2. The circulating fluidized bed boiler of claim 1, wherein the non-mechanical valve further comprises:
one or more solids removal means (60, 61), the solids removal means being adapted to provide a passage for removal of agglomerates, and being located at least one of upstream and downstream of said at least one opening in the bubbling fluidized bed enclosure wall.

3. The circulating fluidized bed boiler of claim 2, wherein the bubbling fluidized bed is located within a lower portion of the circulating fluidized bed boiler reaction chamber, wherein the bubbling fluidized bed is bound by enclosure walls and by the floor of the circulating fluidized bed boiler reaction chamber; and
wherein the in-bed heat exchanger occupies part of the circulating fluidized bed boiler reaction chamber floor and is within the enclosure walls of the bubbling fluidized bed.

4. The circulating fluidized bed boiler of claim 2, wherein the removal means are sealed against furnace pressure; and optionally wherein the circulating fluidized bed boiler further comprises:
one or more screw coolers (88, 89), each being connected to the one or more solids removal means and being adapted for cooling discharged solids and for sealing against furnace pressure.

5. The circulating fluidized bed boiler of claim 1, further comprising one selected from the group comprising:
means for sealing at least one of the collectors, the fluidizing means, and the fluidizing medium supply sources, to allow removal of backsifted solids from the collectors during operation of the circulating fluidized bed boiler; and one or more rotary valves (96, 97) each connected to at least one collector for removal of backsifted solids from the collectors during operation of the circulating fluidized bed boiler furnace.

6. The circulating fluidized bed boiler of claim 1, further comprising:
a plurality of channel walls projecting generally away from the enclosure wall into at least one of the circulating fluidized bed and the bubbling fluidized bed, the channel walls being adapted to reduce lateral movement of solids in one or more directions perpendicular to the direction of solids discharge from the bubbling fluidized bed.

7. The circulating fluidized bed boiler of claim 6, wherein at least one opening is complemented by a channel wall on each side of the opening and wherein said walls both protrude into at least one of the bubbling fluidized bed and the circulating fluidized bed by a distance of at least one half the width of the opening; and optionally wherein the circulating fluidized bed boiler further comprises one or more bridging surfaces linking the tops of a plurality of channel walls, the bridging surfaces being adapted to reduce vertical movement of bed material near at least one opening in the enclosure wall.

8. The circulating fluidized bed boiler of claim 2, further comprising:
independently controlled fluidizing means located at least at one of upstream and downstream of each solids removal means.

9. The circulating fluidized bed boiler of claim 1, wherein the enclosure wall comprises at least two non-mechanical valves, each valve being adapted to independently control solids discharge from the bubbling fluidized bed into the circulating fluidized bed boiler reaction chamber, and wherein each valve comprises at least one independently controlled fluidizing means located at least one of upstream and downstream of its respective opening.

10. The circulating fluidized bed boiler of claim 9, the boiler having a partially-opened condition wherein at least one non-mechanical valve is in a closed state while at least one other non-mechanical valve is in an open state;
wherein said partially-opened state is **characterized by** at least one independently controlled fluidizing means of the closed non-mechanical valve being in a non-fluidizing state; and
wherein said partially-opened state is **characterized by** at least one independently controlled fluidizing means of the open non-mechanical valve being in a fluidizing state.

11. The circulating fluidized bed boiler of claim 1, wherein at least one opening comprises a channel with a depth to height ratio selected from the group comprising: not less than 1.0, and not less than 1.4.

12. The circulating fluidized bed boiler of claim 1, wherein each independently controlled fluidizing means is connected to a fluidizing medium source by a path which passes through a collector, the fluidizing medium being supplied through the collector at an elevation above a maximum level of backsifted solids collected by the collector.

13. The circulating fluidized bed boiler of claim 1, comprising at least one source of fluidizing medium adapted to provide fluidizing medium having reduced oxygen content to at least one independently controlled fluidizing means.

14. The circulating fluidized bed boiler of claim 13, wherein the at least one source of fluidizing medium is adapted to provide fluidizing medium having an oxygen content not exceeding a percentage by volume, the percentage selected from the group comprising: 15%, 12%, 9% and 6%.

15. A method for preventing agglomeration of solids in the circulating fluidized bed boiler of claim 1 when one or more non-mechanical valves are in a closed state, the closed state being **characterized by** the independently controlled fluidizing means of the closed valves not emitting fluidizing medium, the method comprising periodically emitting fluidizing medium from at least one independently controlled fluidizing means of each valve for not less than a percentage of a span when said valves are in the closed state, the percentage selected from the group comprising: 10%, 5% and 2%.

## Patentansprüche

1. Heizkessel mit zirkulierender Wirbelschicht, umfassend:
eine Reaktionskammer des Heizkessels mit zirkulierender Wirbelschicht (1), umfassend Seitenwände und ein Verteilergitter (9) zum Bereitstellen von Verwirbelungsgas in die Reaktionskammer des Heizkessels mit zirkulierender Wirbelschicht;
eine brodelnde Wirbelschicht in einer Kammer, die wenigstens eine Umhüllungswand (30) umfasst;
wenigstens einen steuerbaren bettinternen Wärmetauscher (3), wobei der bettinterne Wärmetauscher in der Kammer angeordnet ist, die die brodelnde Wirbelschicht umfasst;
wenigstens ein nichtmechanisches Ventil (40), das dafür ausgelegt ist, Feststoffausstoß aus der brodelnden Wirbelschicht in die Reaktionskammer des Heizkessels mit zirkulierender Wirbelschicht zu steuern, wobei das Ventil wenigstens eine Öffnung in der Umhüllungswand umfasst und wenigstens eine unabhängig gesteuerte Verwirbelungseinrichtung umfasst, die wenigstens eines von stromaufwärts und stromabwärts bezogen auf die Öffnung angeordnet ist; und
wobei die wenigstens eine unabhängig gesteuerte Verwirbelungseinrichtung (86, 87, 94, 95) jeweils mit einer Verwirbelungsmediumzufuhreinrichtung verbunden ist, wobei die unabhängig gesteuerte Verwirbelungseinrichtung dafür ausgelegt ist, die Flussrate von Feststoffen aus der brodelnden Wirbelschicht zu der Reaktionskammer des Heizkessels mit zirkulierender Wirbelschicht zu steuern, wobei die unabhängig gesteuerte Verwirbelungseinrichtung getrennt von dem Verteilergitter gesteuert wird;
**gekennzeichnet durch**
Sammler (92, 93), die mit der einen oder den mehreren unabhängig gesteuerten Verwirbelungseinrichtungen verbunden sind, wobei die Sammler dafür ausgelegt sind, in dem Fall von Rücksiebung von Feststoffen in die Verwirbelungseinrichtung Feststoffe zu sammeln, so dass die gesammelten Feststoffe die Zufuhr von Verwirbelungsmedium nicht behindern.

2. Heizkessel mit zirkulierender Wirbelschicht gemäß Anspruch 1, wobei das nichtmechanische Ventil ferner umfasst:
eine oder mehrere Feststoffentfernungseinrichtungen (60, 61), wobei die Feststoffentfernungseinrichtungen dafür ausgelegt sind, einen Durchgang zum Entfernen von Agglomeraten bereitzustellen und wenigstens eines von stromaufwärts und stromabwärts bezogen auf die wenigstens eine Öffnung in der Umhüllungswand der brodelnden Wirbelschicht angeordnet sind.

3. Heizkessel mit zirkulierender Wirbelschicht gemäß Anspruch 2, wobei die brodelnde Wirbelschicht in einem unteren Teil der Reaktionskammer des Heizkessels mit zirkulierender Wirbelschicht angeordnet ist, wobei die brodelnde Wirbelschicht von Umhüllungswänden und den Boden der Reaktionskammer des Heizkessels mit zirkulierender Wirbelschicht begrenzt ist; und
wobei der bettinterne Wärmetauscher einen Teil des Bodens der Reaktionskammer des Heizkessels mit zirkulierender Wirbelschicht einnimmt und innerhalb der Umhüllungswände der brodelnden Wirbelschicht angeordnet ist.

4. Heizkessel mit zirkulierender Wirbelschicht gemäß Anspruch 2, wobei die Entfernungseinrichtungen gegen Ofendruck abgedichtet sind; und wobei der Heizkessel mit zirkulierender Wirbelschicht gegebenenfalls ferner umfasst:
einen oder mehrere Wendelkühler (88, 89), die jeweils mit der einen oder den mehreren Feststoffentfernungseinrichtungen verbunden sind und dafür ausgelegt sind, ausgestoßene Feststoffe zu kühlen und gegen Ofendruck abzudichten.

5. Heizkessel mit zirkulierender Wirbelschicht gemäß Anspruch 1, ferner umfassend eines ausgewählt aus der Gruppe umfassend:
eine Einrichtung zum Abdichten wenigstens eines von den Sammlern, den Verwirbelungseinrichtungen und den Verwirbelungsmediumzufuhrquellen, um Entfernen von rückgesiebten Feststoffen aus den Sammlern während des Betriebs des Heizkessels mit zirkulierender Wirbelschicht zu ermöglichen; und ein oder mehrere Drehventile (96, 97), die jeweils mit wenigstens einem Sammler verbunden sind, zum Entfernen von rückgesiebten Feststoffen aus den Sammlern während des Betriebs des Heizkessels mit zirkulierender Wirbelschicht.

6. Heizkessel mit zirkulierender Wirbelschicht gemäß Anspruch 1, ferner umfassend:
eine Vielzahl von Kanalwänden, die allgemein von der Umhüllungswand weg in wenigstens eines von der zirkulierenden Wirbelschicht und der brodelnden Wirbelschicht ragen, wobei die Kanalwände dafür ausgelegt sind, seitliche Bewegung von Feststoffen in einer oder mehreren Richtungen senkrecht zu der Ausstoßrichtung von Feststoffen aus der brodelnden Wirbelschicht zu verringern.

7. Heizkessel mit zirkulierender Wirbelschicht gemäß Anspruch 6, wobei wenigstens eine Öffnung durch eine Kanalwand an jeder Seite der Öffnung ergänzt ist und wobei beide Wände eine Strecke von wenigstens der Hälfte der Breite der Öffnung in wenigstens eines von der brodelnden Wirbelschicht und der zirkulierenden Wirbelschicht ragen; und wobei der Heizkessel mit zirkulierender Wirbelschicht gegebenenfalls ferner eine oder mehrere Verbrückungsflächen umfasst, die die Oberseiten einer Vielzahl von Kanalwänden verbinden, wobei die Verbrückungsflächen dafür ausgelegt sind, senkrechte Bewegung von Bettmaterial nahe wenigstens einer Öffnung in der Umhüllungswand zu verringern.

8. Heizkessel mit zirkulierender Wirbelschicht gemäß Anspruch 2, ferner umfassend:
unabhängig gesteuerte Verwirbelungseinrichtungen, die wenigstens eines von stromaufwärts und stromabwärts bezogen auf jede Feststoffentfernungseinrichtung angeordnet sind.

9. Heizkessel mit zirkulierender Wirbelschicht gemäß Anspruch 1, wobei die Umhüllungswand wenigstens zwei nichtmechanische Ventile umfasst, wobei jedes Ventil dafür ausgelegt ist, unabhängig das Ausstoßen von Feststoffen aus der brodelnden Wirbelschicht in die Reaktionskammer des Heizkessels mit zirkulierender Wirbelschicht zu steuern, und wobei jedes Ventil wenigstens eine unabhängig gesteuerte Verwirbelungseinrichtung umfasst, die wenigstens eines von stromaufwärts und stromabwärts bezogen auf die entsprechende Öffnung angeordnet ist.

10. Heizkessel mit zirkulierender Wirbelschicht gemäß Anspruch 9, wobei der Heizkessel einen teilweise geöffneten Zustand aufweist, bei dem wenigstens ein nichtmechanisches Ventil in einem geschlossenen Zustand vorliegt und wenigstens ein anderes nichtmechanisches Ventil in einem offenen Zustand vorliegt;
wobei der teilweise geöffnete Zustand **dadurch gekennzeichnet ist, dass** wenigstens eine unabhängig gesteuerte Verwirbelungseinrichtung des geschlossenen nichtmechanischen Ventils in einem nichtverwirbelnden Zustand vorliegt; und
wobei der teilweise geöffnete Zustand **dadurch gekennzeichnet ist, dass** wenigstens eine unabhängig gesteuerte Verwirbelungseinrichtung des offenen nichtmechanischen Ventils in einem verwirbelnden Zustand vorliegt.

11. Heizkessel mit zirkulierender Wirbelschicht gemäß Anspruch 1, wobei wenigstens eine Öffnung einen Kanal umfasst, dessen Verhältnis von Tiefe zu Höhe ausgewählt ist aus der Gruppe umfassend: nicht weniger als 1,0 und nicht weniger als 1,4.

12. Heizkessel mit zirkulierender Wirbelschicht gemäß Anspruch 1, wobei jede unabhängig gesteuerte Verwirbelungseinrichtung durch einen Weg, der durch einen Sammler verläuft, mit einer Verwirbelungsmediumquelle verbunden ist, wobei das Verwirbelungsmedium durch den Sammler in einer Höhe über der Maximalhöhe der von dem Sammler gesammelten rückgesiebten Feststoffe zugeführt wird.

13. Heizkessel mit zirkulierender Wirbelschicht gemäß Anspruch 1, umfassend wenigstens eine Quelle von Verwirbelungsmedium, die dafür ausgelegt ist, Verwirbelungsmedium mit verringertem Sauerstoffgehalt an wenigstens eine unabhängig gesteuerte Verwirbelungseinrichtung bereitzustellen.

14. Heizkessel mit zirkulierender Wirbelschicht gemäß Anspruch 13, wobei die wenigstens eine Quelle von Verwirbelungsmedium dafür ausgelegt ist, Verwirbelungsmedium mit einem Sauerstoffgehalt bereitzustellen, der einen Volumenprozentanteil nicht übersteigt, wobei der Prozentanteil ausgewählt ist aus der Gruppe umfassend: 15 %, 12 %, 9 % und 6 %.

15. Verfahren zum Verhindern von Agglomeration von Feststoffen in dem Heizkessel mit zirkulierender Wirbelschicht gemäß Anspruch 1, wenn ein oder mehrere nichtmechanische Ventile in einem geschlossenen Zustand vorliegen, wobei der geschlossene Zustand **dadurch gekennzeichnet ist, dass** die unabhängig gesteuerten Verwirbelungseinrichtungen der geschlossenen Ventile kein Verwirbelungsmedium emittieren, wobei das Verfahren periodisches Emittieren von Verwirbelungsmedium aus wenigstens einer unabhängig gesteuerten Verwirbelungseinrichtung jedes Ventils für nicht weniger als einem Prozentanteil einer Zeitspanne umfasst, wenn die Ventile in dem geschlossenen Zustand vorliegen, wobei der Prozentanteil ausgewählt ist aus der Gruppe umfassend: 10 %, 5 % und 2 %.

## Revendications

1. Chaudière à lit fluidisé circulant comprenant:
une chambre de réaction de chaudière à lit fluidisé circulant (1) comprenant des parois latérales et un réseau de distribution (9) pour fournir un gaz de fluidisation dans la chambre de réaction de chaudière à lit fluidisé circulant;
un lit fluidisé bouillonnant dans un compartiment comprenant au moins une paroi d'enceinte (30);
au moins un échangeur de chaleur intégré au lit pouvant être commandé (3), l'échangeur de chaleur intégré au lit étant situé à l'intérieur du compartiment comprenant le lit fluidisé bouillonnant;
au moins une vanne non mécanique (40) adaptée pour commander l'évacuation des solides du lit fluidisé bouillonnant dans la chambre de réaction de la chaudière à lit fluidisé circulant, la vanne comprenant au moins une ouverture dans la paroi de l'enceinte, et comprenant au moins un moyen de fluidisation commandé indépendamment situé au moins en amont et en aval de l'ouverture; et
les au moins un moyen de fluidisation commandé indépendamment (86, 87, 94, 95) étant chacun connecté à un moyen d'alimentation en milieu fluidisant, le moyen de fluidisation commandé indépendamment étant adapté pour commander un débit de solides du lit fluidisé bouillonnant à la chambre de réaction de la chaudière à lit fluidisé circulant, le moyen de fluidisation commandé indépendamment étant commandé séparément du réseau de distribution; **caractérisée en ce que**
des collecteurs (92, 93) reliés à un ou plusieurs moyens de fluidisation commandés indépendamment, les collecteurs étant adaptés pour collecter les solides en cas de de solides retraversant le tamis jusqu'au moyen de fluidisation de telle sorte que les solides collectés n'obstruent pas l'alimentation en milieu fluidisant.

2. Chaudière à lit fluidisé circulant selon la revendication 1, dans laquelle la vanne non mécanique comprend en outre:
un ou plusieurs moyens d'élimination de solides (60, 61), les moyens d'élimination de solides étant adaptés pour fournir un passage pour l'élimination des agglomérats, et étant situés au moins en amont ou en aval de ladite au moins une ouverture dans la paroi de l'enceinte à lit fluidisé bouillonnant.

3. Chaudière à lit fluidisé circulant selon la revendication 2, dans laquelle le lit fluidisé bouillonnant est situé dans une partie inférieure de la chambre de réaction de la chaudière à lit fluidisé circulant, dans laquelle le lit fluidisé bouillonnant est lié par les parois d'enceinte et par le plancher de la chambre de réaction de la chaudière à lit fluidisé circulant; et
dans laquelle l'échangeur de chaleur intégré au lit occupe une partie du plancher de la chambre de réaction de la chaudière à lit fluidisé circulant et se trouve à l'intérieur des parois de l'enceinte du lit fluidisé bouillonnant.

4. Chaudière à lit fluidisé circulant selon la revendication 2, dans laquelle les moyens d'élimination sont étanches à la pression du four; et éventuellement dans laquelle la chaudière à lit fluidisé circulant comprend en outre:
un ou plusieurs refroidisseurs à tourbillonnage en hélice (88, 89), chacun étant relié à un ou plusieurs moyens d'élimination de solides et étant adapté pour refroidir les solides déchargés et pour assurer l'étanchéité à la pression du four.

5. Chaudière à lit fluidisé circulant selon la revendication 1, comprenant en outre une chaudière choisie dans le groupe comprenant:
des moyens pour sceller au moins l'un des collecteurs, les moyens de fluidisation, et les sources d'alimentation en milieu fluidisant, pour permettre l'élimination des solides retraversant le tamis des collecteurs pendant le fonctionnement de la chaudière à lit fluidisé circulant; et une ou plusieurs vannes rotatives (96, 97) reliées chacune à au moins un collecteur pour l'élimination des solides retraversant le tamis des collecteurs pendant le fonctionnement de la chaudière à lit fluidisé circulant.

6. Chaudière à lit fluidisé circulant selon la revendication 1, comprenant en outre:
une pluralité de parois de canal faisant saillie généralement depuis la paroi de l'enceinte dans au moins l'un parmi le lit fluidisé circulant et le lit fluidisé bouillonnant, les parois du canal étant adaptées pour réduire le mouvement latéral des solides dans une ou plusieurs directions perpendiculaires à la direction de l'évacuation des solides du lit fluidisé bouillonnant.

7. Chaudière à lit fluidisé circulant selon la revendication 6, dans laquelle au moins une ouverture est complétée par une paroi de canal de chaque côté de l'ouverture et dans laquelle lesdites parois font toutes deux saillie dans au moins l'un parmi le lit fluidisé bouillonnant et le lit fluidisé circulant d'une distance d'au moins la moitié de la largeur de l'ouverture; et éventuellement dans laquelle la chaudière à lit fluidisé circulant comprend en outre une ou plusieurs surfaces de pontage reliant les sommets d'une pluralité de parois de canal, les surfaces de pontage étant adaptées pour réduire le mouvement vertical du matériau de lit près d'au moins une ouverture dans la paroi de l'enceinte.

8. Chaudière à lit fluidisé circulant selon la revendication 2, comprenant en outre:
des moyens de fluidisation commandé indépendamment situés au moins en amont ou en aval de chaque moyen d'élimination de solides.

9. Chaudière à lit fluidisé circulant selon la revendication 1, dans laquelle la paroi de l'enceinte comprend au moins deux vannes non mécaniques, chaque vanne étant adaptée pour commander indépendamment l'évacuation des solides du lit fluidisé bouillonnant dans la chambre de réaction de la chaudière à lit fluidisé circulant, et dans laquelle chaque vanne comprend au moins un moyen de fluidisation commandé indépendamment situé au moins en amont ou en aval de son ouverture respective.

10. Chaudière à lit fluidisé circulant selon la revendication 9, la chaudière ayant un état partiellement ouvert dans lequel au moins une vanne non mécanique est dans un état fermé tandis qu'au moins une autre vanne non mécanique est dans un état ouvert;
dans laquelle ledit état partiellement ouvert est **caractérisé par** au moins un moyen de fluidisation commandé indépendamment de la vanne non mécanique fermée se trouvant dans un état non fluidisant; et
dans laquelle ledit état partiellement ouvert est **caractérisé par** au moins un moyen de fluidisation commandé indépendamment de la vanne non mécanique ouverte qui est dans un état fluidisant.

11. Chaudière à lit fluidisé circulant selon la revendication 1, dans laquelle au moins une ouverture comprend un canal avec un rapport profondeur/hauteur choisi dans le groupe comprenant: pas moins de 1,0, et pas moins de 1,4.

12. Chaudière à lit fluidisé circulant selon la revendication 1, dans laquelle chaque moyen de fluidisation commandé indépendamment est relié à une source de milieu fluidisant par un trajet qui passe à travers un collecteur, le milieu fluidisant étant fourni à travers le collecteur à une élévation au-dessus d'un niveau maximum de solides collectés par le collecteur.

13. Chaudière à lit fluidisé circulant selon la revendication 1, comprenant au moins une source de milieu fluidisant adapté pour fournir un milieu fluidisant ayant une teneur réduite en oxygène à au moins un moyen de fluidisation commandé indépendamment.

14. Chaudière à lit fluidisé circulant selon la revendication 13, dans laquelle la au moins une source de milieu fluidisant est adaptée pour fournir un milieu fluidisant ayant une teneur en oxygène ne dépassant pas un pourcentage en volume, le pourcentage étant choisi dans le groupe comprenant: 15%, 12%, 9% et 6%.

15. Procédé pour empêcher l'agglomération de solides dans la chaudière à lit fluidisé circulant selon la revendication 1 lorsqu'une ou plusieurs vannes non mécaniques sont dans un état fermé, l'état fermé étant **caractérisé par le fait que** les moyens de fluidisation commandés indépendamment des vannes fermées n'émettent pas de milieu fluidisant, le procédé comprenant l'émission périodique de milieu fluidisant d'au moins un moyen de fluidisation commandé indépendamment de chaque vanne pendant au moins un pourcentage d'une plage lorsque lesdites vannes sont dans l'état fermé, le pourcentage choisi dans le groupe comprenant: 10%, 5% et 2%.
